Europäisches Patentamt

European Patent Office

Office européen des brevets

(19)

(11) Publication number: **0 023 227**

**A1**

(12)

# EUROPEAN PATENT APPLICATION
published in accordance with Art. 158(3) EPC

(21) Application number: 80900269.4

(22) Date of filing: 30.01.80

Data of the international application taken as a basis:

(86) International application number:
PCT/JP80/00014

(87) International publication number:
WO80/01606
International publication date:
07.08.80

(51) Int. Cl.³: **G 01 C 21/08**
**G 01 C 17/26**

(30) Priority: 31.01.79 JP 10062/79
31.01.79 JP 10063/79

(43) Date of publication of application:
04.02.81 Bulletin 81/5

(84) Designated Contracting States:
FR

(71) Applicant: EBUREN KABUSHIKI KAISHA
35-1, Chuo 3-chome
Nakano-ku, Tokyo 164(JP)

(72) Inventor: KAMIMURA, Masato Eburen Kabushiki
Kaisha
35-1, Chuo 3-chome
Nakano-ku, Tokyo 164(JP)

(74) Representative: BUREAU D.A. CASALONGA
Lilienstrasse 77
D-8000 München 80(DE)

(54) ACTUAL POSITION DETECTING DEVICE FOR A MOVING OBJECT.

(57) An actual position detecting device, which is mounted on a moving object, includes a direction sensor for sensing the direction of movement of the object to deliver an electrical signal representative of direction, a moved distance sensor for sensing the distance the object has moved to deliver an electrical signal representative of said distance, and arithmetic unit for calculating the actual position of the object by using signals from both sensors so as to provide an electrical signal representative of the position, and a display device for indicating the actual position of the object in response to the signal from the arithmetic unit.

./...

F I G. 1

X-COMPONENT REGISTER — 22

DIRECTION DETECTOR — 10

16 — DISPLAY DEVICE

20 — OPERATION CIRCUIT

14 — COVERED DISTANCE DETECTOR

Y-COMPONENT REGISTER — 24

18 — WHEEL

12

F I G. II

81

90
98
96
74
102
88
100  94  92  100
84  82
80
78  70
72
76
86

SPECIFICATION

APPARATUS FOR DETECTING THE CURRENT
POSITION OF A MOVING BODY

Technical Field

This invention relates to an apparatus for detecting ·the current position of a moving body, for example, a vehicle running on the ground, and more particularly to an apparatus for detecting the current position of a moving body which is provided with a bearing-detecting device arranged to detect a terrestrial magnetic line and send forth a signal denoting the bearing in which the moving body is travelling.

Background Art

If, in case a driver runs a vehicle, for example, an automobile on the ground to reach a desired destination, the driver himself or an associate rider is previously well informed of the location of the destination and a course leading thereto, then the fatigue or stress suffered by the driver does not raise an appreciable problem. Where, however, the destination is a new place to the driver and associate rider, or they have to pass along a roadway which was not formerly covered by them, though the destination is already known to them, then they must search for the destination or a strange roadway leading thereto on a map or ask passers-by for required information in order to make sure of the currnet position of their automobile and a correct bearing in which they should ride to reach the destination. Under such condition, the driver himself in particular suffers increased fatigue and stress, probably resulting in the occurrence of a traffic accident. Therefore, demand is made to develop an apparatus capable of detecting the current position of a vehicle.

The current position of a vehicle is generally detected by measuring a distance from the base or on starting point which has been covered by the vehicle and determining the running route of the vehicle from the bearing in which the vehicle has moved. It has been made possible from the past to easily determine the covered distance by means of an odometer attached to the vehicle and also define the running bearing by means of a compass utilizing terrestial magnetism with the aid of a magnet. However, these datas are indicated independently of each other, failing to enable a driver to immediately ascertain the current position of his automobile. An apparatus is indeed known which sends forth a signal showing a covered distance. At present, however, the travelling bearing of a vehicle is determined only by a human being, for example, a driver who reads a terrestrial magnetic line on a magnet and recognizes the running bearing of the vehicle from the reading.

If the detection of the travelling bearing of the

vehicle is effected by indicating a terrestrial magnetic line in the form of, for example, an electric signal, instead of defining the terrestrial magnetic line by the recognition or judgement of a human being, then the current position of the vehicle will be easily determined with great reliability.

This invention has been accomplished in view of the above-mentioned circumstances and is intended to provide an apparatus of simple arrangement which can detect the current position of a moving body correctly and continuously as it goes along.

Disclosure of Invention

An apparatus according to this invention for detecting the current position of a moving body comprises a bearing-detecting device. This bearing-detecting device includes a rotor support carried on the moving body; a rotor rotatably mounted on the rotor support and so arranged as to be always set in a fixed direction by sensing terrestrial magnetism; and a sensing member for detecting an angle defined by the running direction of the moving body with the fixed direction in which the rotor is always set, thereby determing the running direction of the moving body, issuing a signal corresponding to the running bearing of the moving body. Therefore, the subject apparatus can detect the current position of a moving body by a simple arrangement correctly and continuously as it runs on.

Brief Description of Drawings

Fig. 1 is a block diagram of an apparatus according to a first embodiment of this invention for detecting the current position of a moving body;

Fig. 2 shows, partly in section, a bearing-detecting device included in the current position-detecting apparatus according to a first embodiment of the invention;

Fig. 3 is a sectional view on line III - III of Fig. 2;

Figs. 4 to 6 schematically illustrate the operation of the bearing-detecting device shown in Figs. 2 and 3;

Fig. 7 is a sectional view indicating the operation of the  bearing-detecting device according to the first embodiment;

Figs. 8 to 10 schematically illustrate the patterns displayed by the dispaly means of the apparatus;

Fig. 11 is a sectional view of a bearing-detecting device included in a current position-detecting apparatus acording to a second embodiment of the invention;

Fig. 12 is a sectional view illustrating the operation of the bearing-detecting device according to the second embodiment of Fig. 11;

Fig. 13 schematically indicates the arrangement of the bearing-detecting device according to the second embodiment;

Fig. 14 is a chart showing the principle of a bearing-detecting device included in a current position-detecting apparatus according to a third embodiment; and

Fig. 15 is a sectional view on line XV-XV of Fig. 14.

Best Mode of Carrying Out the Invention

Description is now given of one embodiment according to this invention with reference the accompanying drawings.

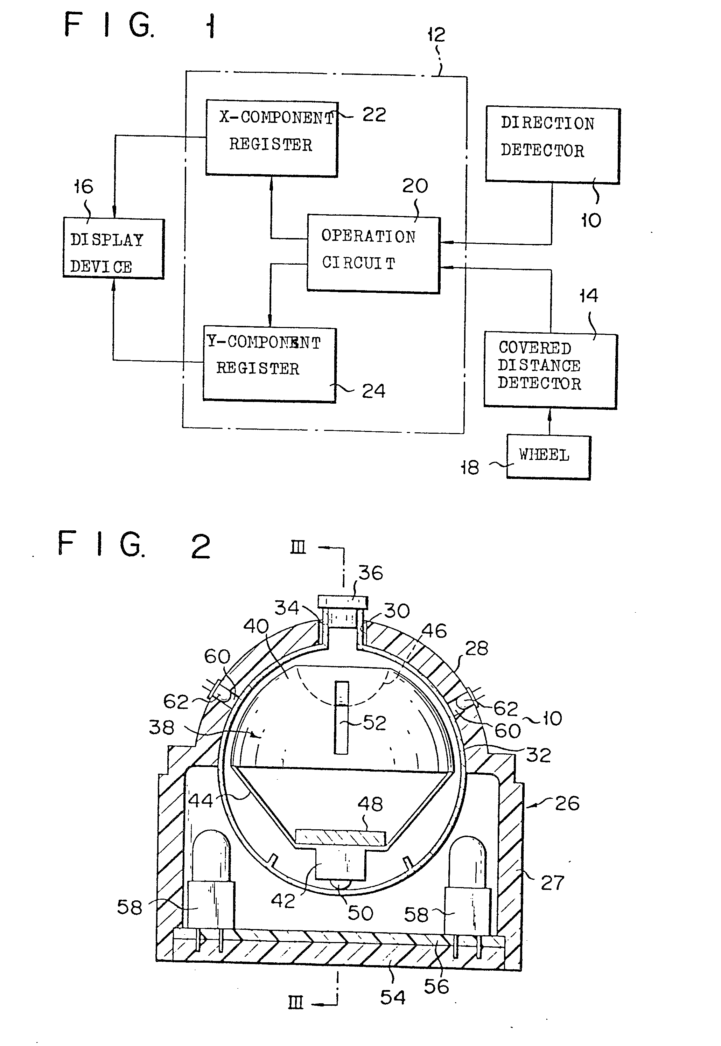

Fig. 1 is a block diagrom of an apparatus embodying this invention for detecting the current position of a moving body. The apparatus is fitted to a moving body (now shown), for example, an automobile running on the ground. The apparatus is mainly comprised of a bearing-detecting device 10, arithmetic operation unit 12, covered distance detector 14 and display device 16.

The bearing-detecting device 10 is designed, as later described, to supply the arithmetic operation unit 12 with an electric signal denoting the running bearing of the automobile.

The covered distance detector 14 is provided with a pulse generator for issuing pulses corresponding to a distance covered by an automobile to the arithmetic operation unit 12. The pulse generator is the known type which is so arranged as to produce pulses according to a number of rotations of an automobile wheel 18, namely, each time the automobile runs for a prescribed unit distance.

The arithmetic operation unit 12 which receives output electric signals from the bearing-detecting device 10 and covered distance detector 14 comprises an arithmetic operation circuit 20, X component register 22, and Y component register 24. The arithmetic operation circuit 20 arithmetically processes two signals, that is, a data signal representing a bearing in which the automobile has run and a data signal denoting a distance covered by the automobile, converts the processed results into the X component (horizontal component) and Y component (vertical component) of the rectangular coordinate system and sends forth the converted signals. The X component register 22 and Y component register 24 respectively integrate the output signals of the X and Y components and generate an output signal, each time a prescribed amount of data is integrated.

The display device 16 supplied with data delivered from the X and Y component registers 22, 24 comprises a screen fitted with a map showing an area extending from a starting point to a destination. The screen is so arranged that data is plotted on the X and Y coordinates in accordance with output signals from the X and Y component registers 22, 24.

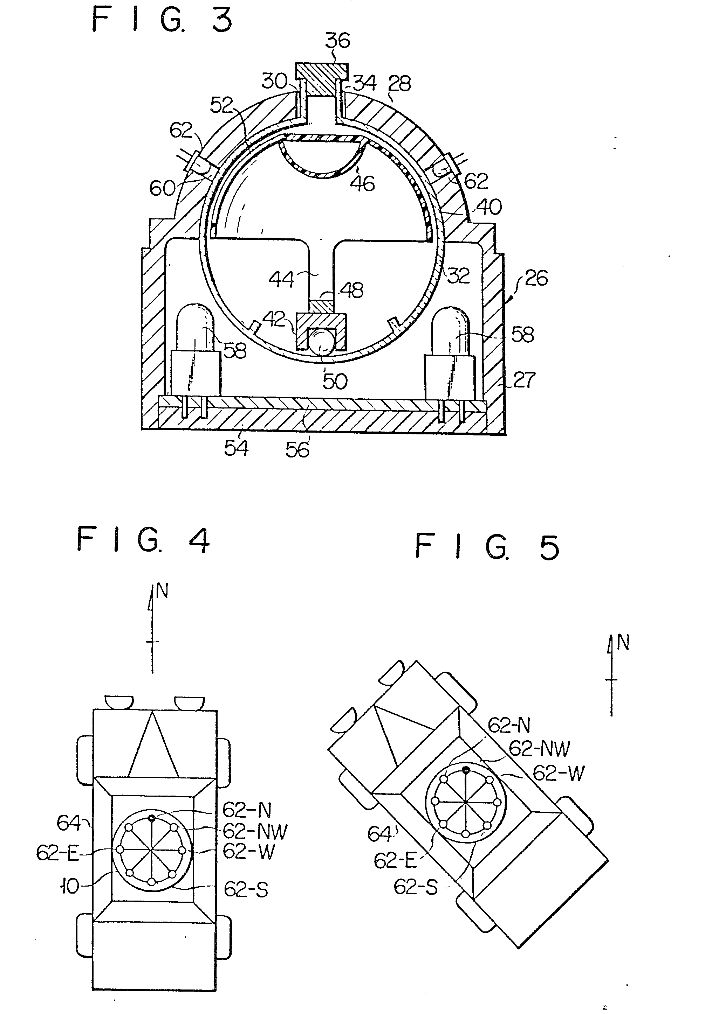

Figs. 2 and 3 jointly show the bearing-detecting device 10 included in a current position-detecting apparatus according to the first embodiment. Reference numeral 26 given in the drawings denotes a rotor support, carried on an automobile (not shown). The rotor support 26 comprises a blind substantially cylindrical member 27 whose axis extends vertically and whose upper part is left open, and a head member 28 whose inner wall is semi-spherically snaped and closely mounted on the upper opening substantially to cover it. A through hole 30 penetrates the wall of the head member 28 in the proximity of its apical point. Fixed in the spherically shaped inner wall of the head member 28 is the upper half of a hollow ball 32 which is prepared from a transparent material and whose outer diameter coincides with the inner diameter of the spherical head member 28. A liquid inlet port 34 is projectively mounted on the upper wall of the hollow ball 32 to be exposed to the outside through the through hole 30. A cock 36 is detachably fitted to the liquide inlet port 34 to seal the interior of the hollow ball 32. A rotor 38 is rotatably received in the hollow ball 32, which is fitted with a proper amount of transparent liquid, for example, spindle oil.

The rotor 38 comprises an umbrella-shaped member 40 in the upper part and a magnet support rest 42 in the lower part. The umbrella-shaped member 40 and magnet support rest 42 are connected by a pair of connecting rods 44. A hollow float 46 is set inside of the top wall of the umbrella-shaped member 40. The float 46 imparts a buoyant force to the rotor 38 to cause that portion of the rotor 38 which is disposed above the center of the umbrella-shaped member 40 to be always turned upward in the above-mentioned liquid. A magnet 48 is mounted on the magnet support rest 42 with the axis of the magnet 48 aligned with the rotation axis of the rotor 38, thereby causing the rotor 38 to be kept in a balanced position.

The magnet 48 has a function of causing the rotor 38 to be set along the terrestrial magnetic line, namely, along a line extending from the north to the south pole of the terrestrial magnetism. Further, the weight of the magnet 48 causes the lower portion of the rotor 38 to be always pressed downward to let the direction in which the gravitational force acts coincide with the rotation axis of the rotor 38. Provided on the underside of the magnet support rest 42 is a steel ball 50 which is made to freely roll along the inner wall of the hollow ball 32. The steel ball 50 is intended to minimize a contact area between the outer peripheral wall of the rotor 38 and the inner peripheral wall of the hollow ball 32 when the rotor 38 is rotated in the hollow ball 32 and facilitate the rotation of the rotor 38 by reducing frictional resistance occurring at the rotation.

The umbrella-shaped member 40 of the rotor 38 is prepared from an opaque material and made into a semispherical form. A vertically extending slit 52 is formed in the peripheral wall of the umbrella-shaped member 40. This slit 52 alone allows for the passage of a light to the outside.

A base board 56 is fixed to the inner wall of a circular bottom board 54 of the rotor support 26. A plurality of light-emitting elements, for example, light-emitting diodes 58 are equidistantly mounted on the base board 56 along the outer periphery of the hollow ball 32. A plurality of holes 60 equidistantly penetrate the peripheral wall of the head member 28 constituting the upper part of the rotor support 26 along a prescribed horizontal plane of the head member 28, in such a manner that imaginary lines connecting every two adjacent holes 60 to the center of the rotor support 26 define an angle of 10 degrees with each other. A sensing member set in each hole 60 is constituted by a light-receiving element 62 which is electrically rendered conducting and nonconducting according to the supply and cutoff of a light, thereby acting as a sort of photoelectric switch. This light-receiving element 62 receives a light sent forth from the light-emitting diode 58 and conducted through the slit 52 of the umbrella-shaped member 40. This slit 52 has a sufficient width and length to enable each light-receiving element 62 to be supplied with a full amount of a light sent forth from the light-emitting diode 58.

Description in now given of the operation of an apparatus embodying this invention which is arranged as described above to detect the current position of a moving bady.

Referring to the bearing-detecting device 10, a light sent forth from the light-emitting diode 58 passes through the lower part of the hollow ball 32 and a liquid filled therein, and illuminates the whole inner wall of the umbrella shaped member 40 of the rotor 38. Only a light passing through the slit 52 of the umbrella-shaped member 40 reaches the light-receiving element 62 provided on the outside of the umbrella-shaped member 40 at a point facing the slit 52, causing the light-receiving element 62 to be actuated.

Since the rotor 38 is always positioned in a direction extending from the north to the south pole of the terrestrial magnetism by the action of the magnet 48, the slit 52 of the umbrella-shaped member 40 of the rotor 38 always indicates a fixed direction. Where, therefore, an automobile runs in a given bearing, the rotor 38 is rotated relatively to the rotor support 26 fixed to the automobile, and is kept in the direction in which the rotor 38 is rotated. At this time, a light-receiving element 62 facing the slit 52 which shows the travelling bearing of the automobile is actuated upon receipt of a light conducted through the slit 52.

The fixed direction of the slit 52 is referred to as the standard direction, for example, the north pole direction of terrestrial magnetism. If, in case an automobile runs in a given bearing, that of the plural light-receiving elements 62 which sends forth an electric signal is distingnished, then the running bearing of the automobile can be electrically displayed in accordance with an angle defined by the running direction with the standard direction.

Figs. 4 to 6 concretely illustrate the manner in which the subject current position-detecting apparatus is operated as described above.

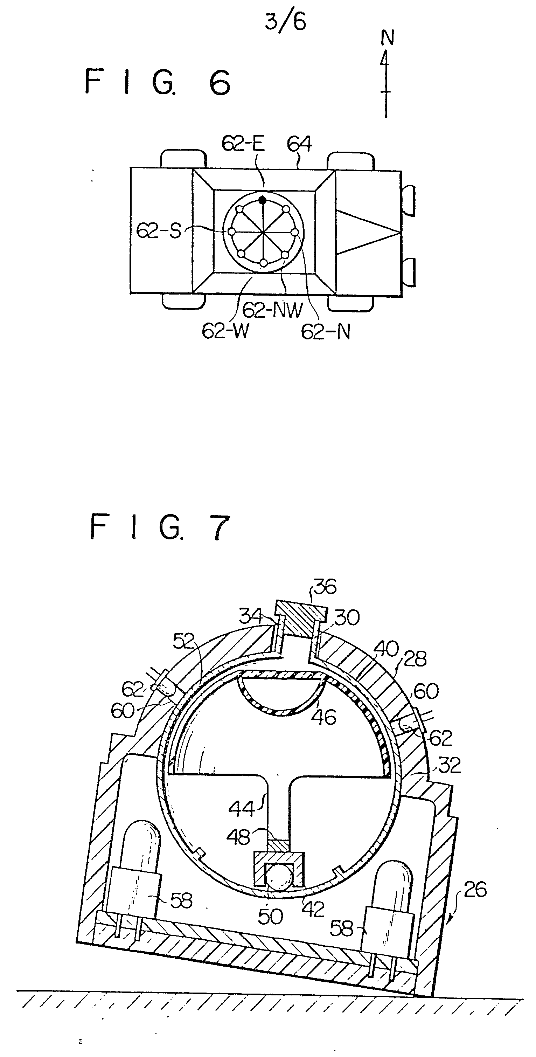

The position of an automobile 64 given in Fig. 4 is taken to indicate the north direction in which the automobile 64 starts. Since the slit 52 is always directed to the north, an angle defined by the running direction of the automobile 64 with the north direction indicated by the rotor 38 or slit 52 stands at zero. A light-receiving element 62 which produces a signal at this time is marked with a numeral "62-N", that is, north bearing. Where the automobile 64 runs, as shown in Fig. 5, in a direction displaced 45° to the left from the starting direction, then a light-receiving element 62-NW selected from all the elements issues an electric signal, indicating that the automobile 64 is running in a north-western bearing as viewed from the terrestrial magnetic line. Later where the automobile 64 is travelling, as shown in Fig. 6, in a direction displaced 135° to the right from the position of Fig. 5, then a light-receiving element 62-E sends forth an electric signal showing that the automobile 64 is travelling eastward.

Fig. 7 illustrates the manner in which the bearing-detecting device 10 is operated when an automobile momentarily careens. The upper part of the rotor 38 is kept vertically upward by the buoyant force of the float 46, and the lower part of the rotor 38 is pressed straight downward by the weight of the magnet 48. As a result, the rotor 38 is rotated with its axis aligned with the vertical direction. Regardless of the careened position of the automobile, the rotor 38 has a fixed rotation axis and is always rotated in a fixed direction due to the action of the terrestrial magnetism. This fact remains unchanged even when the rotor 38 undergoes a force of acceleration corresponding to an increase or decrease in the running speed of the automobile.

An electric signal showing the travelling bearing of the automobile which is sent forth from the bearing-detecting device 10 and an electric signal denoting a distance covered by the automobile between the starting point and current point which is issued from the covered distance detector 14 are supplied to the arithmetic operation unit 12, where the current position of the automobile is arithmetically determined.

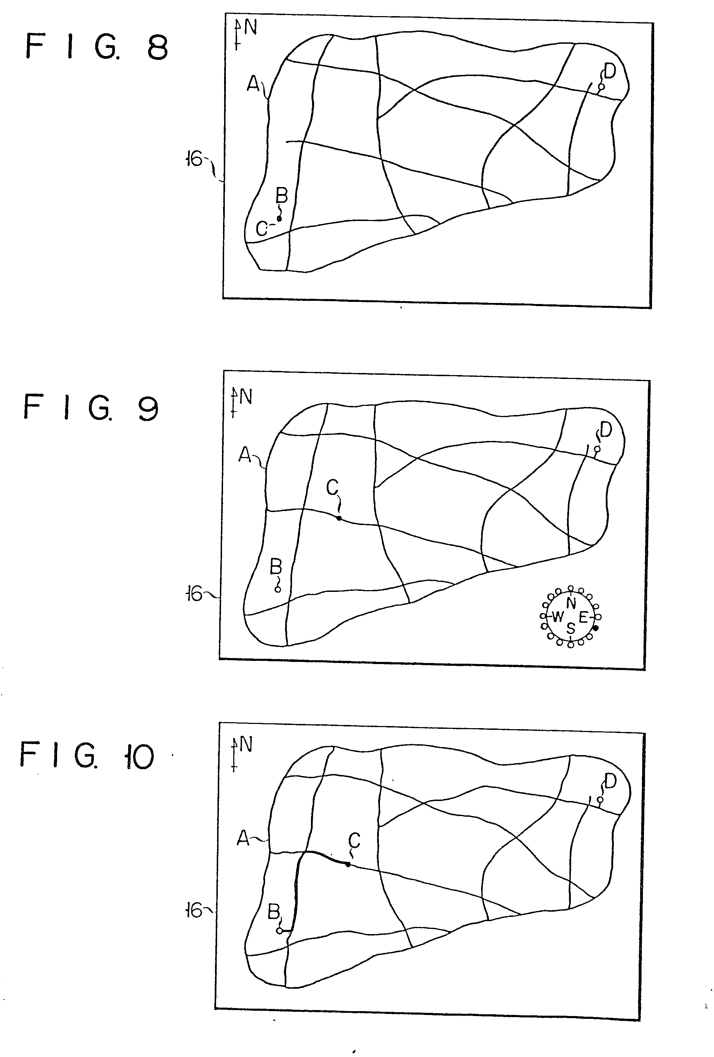

The arithmetic operation unit 12 is supplied with data on a reduced scale version of a map A of Fig. 8, fitted to the display device 16. Where, therefore, a current position mark C is previously set at a starting point given on the map A before an automobile begins to run, then the actual current position of the automobile is automatically and continuously indicated by the mark C whose position in the map A is shifted from to time.

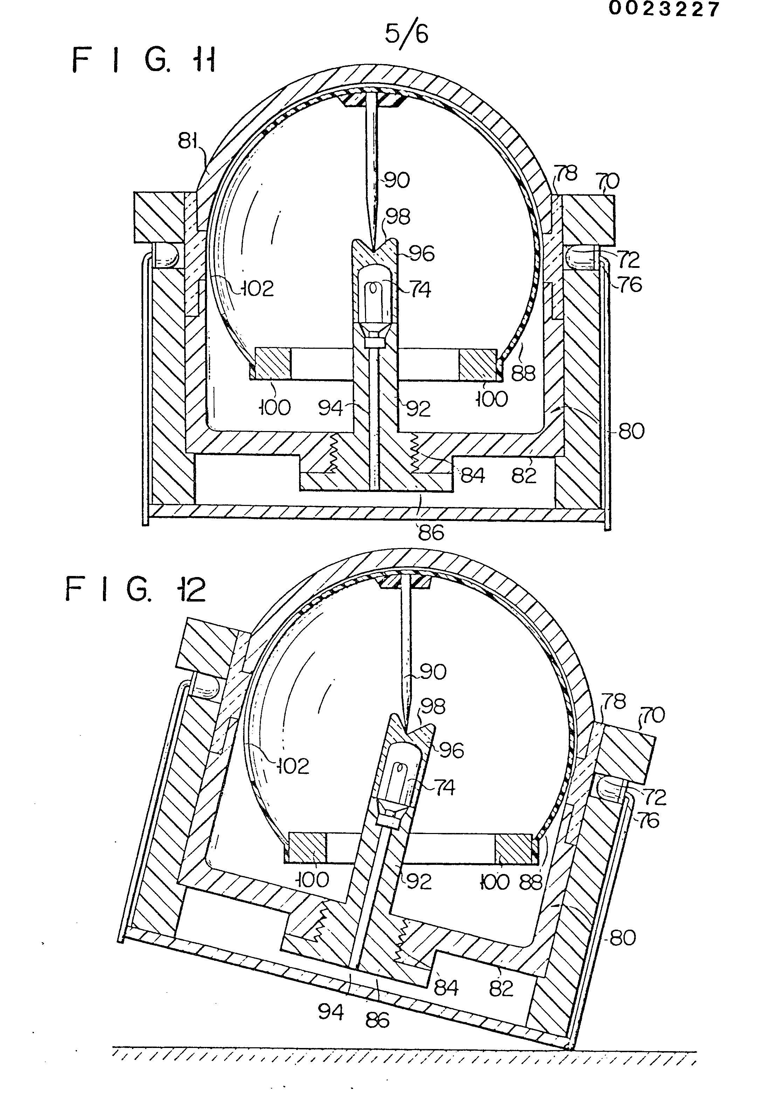

The display means of the display device 16 may well serve the purpose, if it only indicates the current position C of an automobile as illustrated in Fig. 8. However, it is also advisable for the display means to show not only the current position C of the automobile but also, as shown in Fig. 9, its running bearing. It is also possible, as shown in Fig. 10, to continuously electrically hold signals denoting the current position C of the automobile and indicate its running course in the form of the locus of the momentarily shifting current position C.

Where an apparatus for detecting the current position of a moving body embodying this invention which is constructed as previously described is provided with particularly the display device 16 of Fig. 9, then it can be readily recognized at a look that the momentarily shifting mark C on the map A denotes the current position of an automobile running from a starting point B to a destination D; the automobile is running in the bearing of East-South-East; and it can be easily judged whether the automobile should go straight forward or turn to the left at the coming junction to reach the destination D.

Description was given with reference to Figs. 2, 3 and 7 of a bearing-detecting device included in a current position-detecting apparatus according to the first embodiment of this invention. However, the object and effect of the invention can be realized not only by the apparatus according to the first embodiment of the invention for detecting the current position of a moving body which is provided with the bearing-detecting device 10 but also by the current position-detecting apparatus provided with a bearing-detecting device 10 having any other construction.

Figs. 11 and 12 jointly illustrate second embodiment of the bearing-detecting device 10. A rotor support 70 is a blind substantally round cylindrical member open at the top, and is carried on an automobile (not shown). A plurality of holes 72 crosswise penetrate the peripheral wall of the upper part of the rotor support 70 equidistantly in a circumferential direction. Provided in each hole 72 is a light-receiving element 76 to be supplied with a light issued from the later described light-emitting element 74. A blind substantially round cylindrical hollow member 80 open at the top is fitted into the rotor support 70. A transparent portion 78 is formed in that part of the hollow member 80 which faces the hole 72.

A head member 81 whose inner wall is made into a semispherical form is closely fitted into the opening of the hollow member 80. The center of the semispherical inner wall of the head member 81 is set on substantially the same horizontal plane as the light-receiving elements 76. A hole 84 crosswise penetrates that portion of the base board 82 of the hollow member 80 which is disposed near the center thereof. A cock 86 is detachably fitted into the hole 84 to close said hollow member 80. A rotor 88 is rotatably received in the hollow member 80, which is fitted with a proper amount of a transparent liquid, for example, spindle oil.

The rotor 88 is formed of a thin-walled lightweight substantially spherical member whose lower portion is cut off to provide a circular opening. A sharp-ended support pin 90 vertically extends from the center of the upper inner wall to the center of the spherical rotor 88. Therefore, this spherical rotor 88 is rotated about an imaginary axis extending from the center of the circular opening to the center of the sphere of the rotor 88. The tip of the pin 90 is supported at the center of the spherical form of the rotor 88. The tip of the pin 90 is made to coincide with the center of the semispherical portion of the hollow member 80. Therefore, the rotor 88 and the semispherical portion of the hollow member 80 are made concentric in cross section.

A doughnut-shaped weight is mounted on the periphery of the lower circular opening of the spherical rotor 88. Since the weight is positioned below the tip of the support pin 90 used as a fulcrum, the spherical rotor 88 as a whole functions as a sort of balancing toy. Those portions of the doughnut-shaped weight which are symmetrically disposed with respect to the center of the lower circular opening of the spherical rotor 88 constitute a pair of magnets 100, the remaining portions of the doughnut-shaped weight being made of a nonmagnetic material. Therefore, the spherical rotor 88 is always made rotatable about the fulcrum tip of the support pin 90 in a fixed direction, namely, along the terrestrical magnetic line indicated by the paired magnets 100.

The doughnut-shaped weight as a whole may constitute a magnet 100. In this case, the magnet 100 acts in the diametric direction of the doughnut-shape, and the spherical rotor 88 is obviously rotated in any direction.

The spherical rotor 88 is made of opaque material. A vertically extending slit 102 is formed in the peripheral wall of the spherical rotor 88. A light sent forth from the light-emitting element 74 passes through the vertically extending slit 102. This vertically extending slit 102 has a sufficient width and length to allow a full amount of light issued from the light-emitting element 74 to be conducted to the transparent portion 78 of the hollow member 80 and that of a plurality of light-receiving elements 76 which happeds to face the vertical slit 102 according as the rotor 88 is rotated.

The second embodiment of the invention shown in Figs. 11 and 12 which is constructed as described above enables the object of this invention to be fully attained, even when are automobile is momentarily careened or runs at an accelerated speed.

The foregoing description of the second embodiment refers to the case where the vertically extending slit 102 of the rotor 88 was made to have a sufficient width to allow for passage of a full amount of light issued from the light-emitting element 74 to a single light-receiving element 76. However, this invention is not limited to this arrangement. Further, it is possible to let the vertically extending slit 162 have a sufficient width to provide a minimum light path (indicated in 2 dots-dash lines in Fig. 13) required for two adjacent light-receivig elements 76 to be fully illuminated by a light delivered from the light-emitting element 74. Where a single light-receiving element 76 is actuated, then a bearing indicated by the light-receiving element 76 is displayed. In contrast, where two adjacent light-receiving elements 76 are operated, then a bearing intermediate between the two bearings represented by the two adjacent light-receiving elements 76 is recognized as a true bearing in which a moving body, for example, an automobile is running. For instance, where the two adjacent light-receiving elements 76 respectively denote north-east (NE) and north (N), then a bearing intermediate between these bearings NE and N, that is a bearing NNE (north-north-east) is a true bearing in which the automobile is travelling.

Where the slit 102 is made to have a sufficient width to enable two adjacent light-receiving elements 76 to be fully illuminated by a light issued from the light-emitting element 74, then the precision with which the running bearing of, for example, an automobile can be detected is doubly increased over the case where a single light-receiving element 76 is actuated. This means that even if a number of the light-receiving elements 76 is reduced to half that which is required when an arrangement is made for single light-receiving element 76 to be operated, the running bearing of, for example, an automobile can be detected with the same degree of precision as is realized by the second embodiment having the bearing-detecting device 10 of Figs. 11 and 12.

The above-mentioned arrangement by which the vertically extending slit 102 is chosen to have a sufficient width and length to enable two adjacent light-receiving elements 76 to be fully illuminated by a light issued from the light-emitting element 74 is also applicable to the previously described first embodiment having the bearing-detecting device 10.

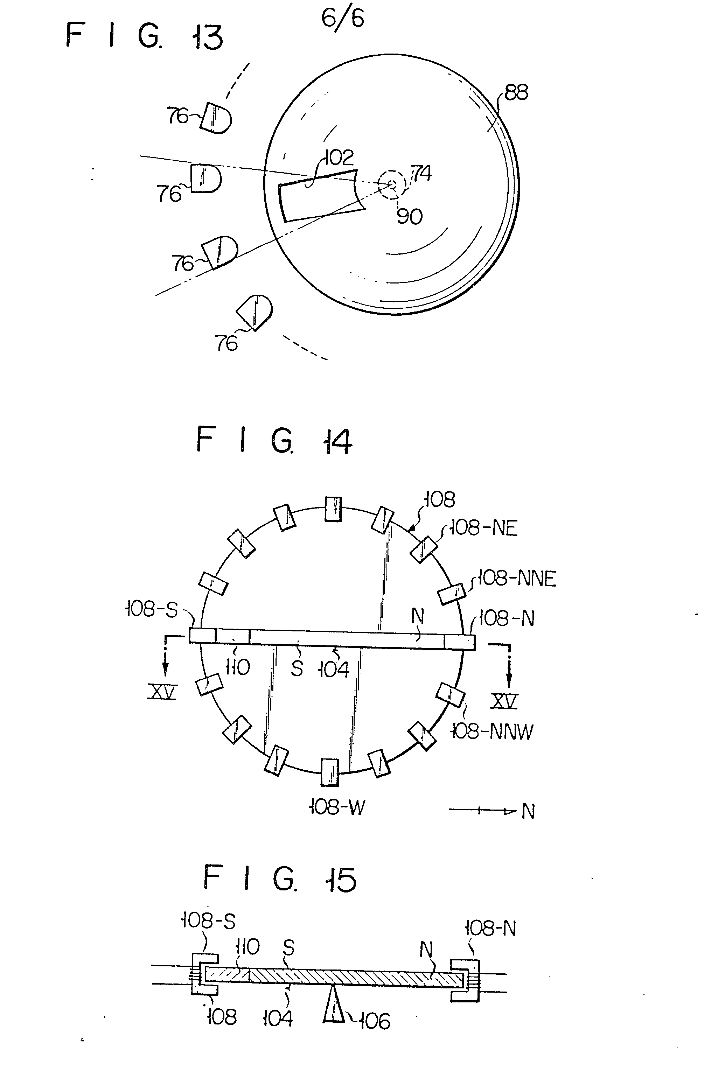

The foregoing description of the two embodiments having bearing-detecting device 10 refers to the case where, in one of the embodiments, means for converting a light signal into an electric signal was formed of a light-emitting element 58 and a light-receiving element 62, and, in the other embodiment, means for converting a light signal into an electric signal was constituted by a light-emitting element 74 and a light-receiving element 76. However, this invention is not limited to this arrangement. Obviously, it is possible to apply any other type of electric conversion device. For instance, it is possible to use a mechanism schematically shown in Figs, 14 and 15 which converts a magnetic signal into an electric signal by utilizing the magnetism of the magnet 48 provided for the rotor 38 or the magnetism of the magnet 100 fitted to the rotor 88. With the magnetic-electric conversion deirce of Figs. 14 and 15, a rod-like rotor, for example, a magnetic needle 104 which senses terrestrial magnetism and is always positioned in the direction of the terrestrial magnetic line is kept in a horizontally rotatable position by a rotor-supporting fulcrum 106. A plurality of (sixteen indicated) of elements, for example, Hall elements 108 for convering a magnetic signal into an electric signal are equidistantly arranged close to the circumference of a circle centered by the rotor support fulcrum 106, along which the magnetic needle 104 is rotated.

A distance between the rotor support fulcrum 106 and the N pole tip of the magnetic needle 104 is made longer than a distance between the rotor support flucrum 106 and the S pole tip of the magnetic needle 104. The S pole tip of the magnetic needle 104 is fitted with a nonmagnetic member 110 having a length corresponding to the deficiency of the latter distance as compared with the former distance, thereby causing only the N pole of the magnetic needle 104 to be detected by, for example, Hall sensing elements 108.

Where a moving body, for example, an automobile is fitted with the third embodiment of the bearing-detecting deivce 10 fundamentally arranged as shown in figs. 14 and 15, then that of the Hall sensing elements 108 which happens to face the N pole tip of the magnetic needle 104 according as it is rotated sends forth an electric signal. Where, in Fig. 14, a sensing element 108-N issues an output signal having a logic level "1", then an automobile is regarded as moving in the north pole direction of terrestrial magnetism. Where a sensing element 108-SW sends forth an output signal having a logic level "1", then the automobile is considered to be running in a bearing south-west of the terrestrial magnetic line.

The foregoing description refers to the case, where the sensing elements 108 were formed of Hall elements. However, the present invention is not limited to this arrangement. The sensing elements 108 may be constituted by, for example, magnetic resistance elements. In the above-mentioned embodiment, the north pole tip of the magnetic needle 104 was detected by any of the detection elements 108. However, it is possible to make an arrangement for the south pole tip of the magnetic needle 104 to be detected by any of the detection elements 108.

Claims:

1. An apparatus for detecting the current position of a moving body which comprises a bearing-detecting device including

a rotor support carried on the moving body;

a rotor rotatably mounted on the rotor support to be always set in a fixed direction by sensing terrestrial magnetism; and

a sensing member for detecting an angle defined by the running direction of the moving body with the fixed direction in which the rotor is always set, thereby determining the running bearing of the moving body, issuing a signal corresponding to the running bearing of the moving body.

2. The apparatus according to claim 1, wherein the rotor is provided with a magnet thereby always indicating a direction along the terrestrial magnetic line defined between both poles of terrestial magnetism.

3. The apparatus according to claim 2, wherein the sensing member comprises a plurality of sensing elements which detect a line of a maximum magnetic force of a magnet mounted on the rotor and are equidistantly arranged along the periphery of the rotor support; and the direction in which the rotor is rotated at a given point of time is determined by any of the magnetism-sensing elements.

4. The apparatus acording to claim 3, wherein the magnetism-sensing elements are consisted of Hall elements.

5. The apparatus according to claim 4, wherein the magnetism-sensing elements are consisted of magnetism-resisting elements.

6. The apparatus according to claim 2, wherein the rotor is constituted by a partly spherical hollow member provided with a slit.

7. The apparatus according to claim 6, wherein the sensing member comprises at least one light-emitting element fitted to the rotor support to introduce a light into the rotor, and a plurality of light-receiving elements equidistantly arranged along the peripheral wall of the rotor support, one or more of which receive a light issued from the light-emitting element and conducted through the slit of the rotor; and that of the light-receiving elements which is illuminated by a light passing through the slit sends forth a signal, thereby defining the bearing in which the rotor is rotated at a given point of time.

8. The apparatus according to claim 7, wherein the light-emitting element is positioned substantially in the center of the interior of the rotor.

9. The apparatus according to claim 7 or 8, wherein the slit is chosen to have a sufficient size to enable a light issued from the light-emitting element to be fully irradiated on one or two adjacent light-receiving elements.

10. The apparatus according to any of preceding claims 1 to 9, which further comprises:

a covered distance detector which measures a distance covered by the moving body and produces a signal denoting said covered distance;

an arithmetic operation unit which is supplied with output signals from the bearing-directing device and covered distance detector, arithmetically determine the current position of the moving body and sends forth a signal denoting said current position; and

a display device which is supplied with the output signal from the arithmetic operation unit and displays the current position of the moving body from said output signal.

11. The apparatus according to claim 10, wherein the arithmetic operation unit is provided with an arithmetic operation circuit for arithmetically calculating the X and Y components of the rectangular coordinate system, thereby determining the current position of the moving body.

12. The apparatus according to claim 11, wherein the arithmetic operation unit comprises an X component register for integrating the X component and a Y component register for integrating the Y component.

13. The apparatus according to claim 10, 11 or 12, wherein the display device indicates the current position of the moving body in the form of a point.

14. The apparatus according to claim 13, wherein the display device further indicates the bearing in which the moving body is running.

15. The apparatus according to claim 10, 11 or 12, wherein the display device defines the current position of the moving body by continuously indicating the course along which the moving body has travelled.

F I G. 1

F I G. 2

F I G. 3

F I G. 4

F I G. 5

F I G. 6

F I G. 7

F I G. 8

F I G. 9

F I G. 10

F I G. 11

F I G. 12

F I G. 13

F I G. 14

F I G. 15

# INTERNATIONAL SEARCH REPORT

**0023227**

International Application No **PCT/JP80/00014**

## I. CLASSIFICATION OF SUBJECT MATTER (if several classification symbols apply, indicate all) [1]

According to International Patent Classification (IPC) or to both National Classification and IPC

Int. Cl.³   G01C21/08, G01C17/26

## II. FIELDS SEARCHED

### Minimum Documentation Searched [4]

| Classification System | Classification Symbols |
|---|---|
| I P C | G01C17/00 – 17/38, G01C21/00 – 21/24 |

### Documentation Searched other than Minimum Documentation to the Extent that such Documents are Included in the Fields Searched [5]

| | |
|---|---|
| Jitsuyo Shinan Koho | 1926 – 1980 |
| Kokai Jitsuyo Shinan Koho | 1971 – 1980 |

## III. DOCUMENTS CONSIDERED TO BE RELEVANT [14]

| Category [*] | Citation of Document, [16] with Indication, where appropriate, of the relevant passages [17] | Relevant to Claim No. [18] |
|---|---|---|
| X | GB, A, 1438512, 1976-6-9 <br> See Fig. 16  B. HOWARD | 1,2.6-9 |
| X | GB, A, 1321212, 1973-6-27 <br> LAITRAM CORP. | 1,2,7,9 |
| X | GB, A, 1494626, 1977-12-7 <br> BRVZ DE FERRANTI and RMS MURRAY | 1,2,7,9 |
| X | JP, Y1, 48-29480, 1973-9-7 <br> Yoshino Denki Kabushiki Kaisha | 1,2,7,8 |
| X | JP, Y1, 49-10854, 1974-3-15 <br> Tokyo Shibaura Electric Co., Ltd. | 1,2,7,8 |
| P | JP, A, 54-48275, 1979-4-16 <br> Nippon Jidosha Buhin Sogo Kenkyusho <br> Kabushiki Kaisha | 1-3,7,9 |
| X | JP, U, 53-39460, 1978-4-6 <br> Sony Corporation | 1-4 |

* Special categories of cited documents: [15]

"A" document defining the general state of the art

"E" earlier document but published on or after the International filing date

"L" document cited for special reason other than those referred to in the other categories

"O" document referring to an oral disclosure, use, exhibition or other means

"P" document published prior to the International filing date but on or after the priority date claimed

"T" later document published on or after the International filing date or priority date and not in conflict with the application, but cited to understand the principle or theory underlying the invention

"X" document of particular relevance

## IV. CERTIFICATION

| Date of the Actual Completion of the International Search : | Date of Mailing of this International Search Report : |
|---|---|
| April 21, 1980 (21.04.80) | April 28, 1980 (28.04.80) |

| International Searching Authority [1] | Signature of Authorized Officer [20] |
|---|---|
| Japanese Patent Office | |

Form PCT/ISA/210 (second sheet) (October 1977)

| | FURTHER INFORMATION CONTINUED FROM THE SECOND SHEET | |
|---|---|---|
| X | JP, U, 51-72066,  1976-6-7<br>TOKYO SHIBAURA ELECTRIC CO., LTD. | 1-4 |
| X | JP, U, 51-2962,    1976-1-10<br>Nippon Koku Denshi Kogyo Kabushiki Kaisha | 1,2,7 |
| X | JP, U, 53-129356, 1978-10-14<br>NIPPONDENSO CO., LTD. | 10-13,15 |
| X | JP, A, 49-107560, 1974-10-12<br>OMRON TATEISI ELECTRONICS CO. | 10-13,15 |

**V.☐ OBSERVATIONS WHERE CERTAIN CLAIMS WERE FOUND UNSEARCHABLE** [10]

This international search report has not been established in respect of certain claims under Article 17(2) (a) for the following reasons:

1.☐ Claim numbers _____, because they relate to subject matter [12] not required to be searched by this Authority, namely:

2.☐ Claim numbers _____, because they relate to parts of the international application that do not comply with the prescribed requirements to such an extent that no meaningful international search can be carried out [13], specifically:

**VI.☐ OBSERVATIONS WHERE UNITY OF INVENTION IS LACKING** [11]

This International Searching Authority found multiple Inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

Remark on Protest

☐ The additional search fees were accompanied by applicant's protest.

☐ No protest accompanied the payment of additional search fees.

Form PCT/ISA/210 (supplemental sheet (2)) (October 1977)